Europäisches Patentamt

**European Patent Office**

Office européen des brevets

(19)

(11) Publication number: **0 077 595**

**A1**

(12) **EUROPEAN PATENT APPLICATION**

(21) Application number: **82201304.1**

(22) Date of filing: **18.10.82**

(51) Int. Cl.³: **G 01 N 27/22**

(30) Priority: **21.10.81 NL 8104768**

(43) Date of publication of application:
**27.04.83 Bulletin 83/17**

(84) Designated Contracting States:
**BE CH DE FR GB LI NL SE**

(71) Applicant: **P. MAASKANT & ZONEN B.V.**
**P.O. Box 9**
**14, Havenkade NL-4310 AA Bruinisse(NL)**

(72) Inventor: **Maaskant, Aart**
**'t Hoefje 24**
**NL-4311 EZ Bruinisse(NL)**

(74) Representative: **Mensen, Herbert, Ir.**
**Octrooibureau Polak & Charlouis Laan Copes Van**
**Cattenburch 80**
**NL-2508 GM Den Haag(NL)**

(54) **Through-flow transducer.**

(57) The invention pertains to a through-flow transducer of the plate-capacitor-type to be built in into a tubing system, in which the through-flowing liquid functions as dielectric. The electrodes of the capacitor are not opposite each other but axially juxtaposed, separated by a small but constant gap width so that a high sensibility can be obtained.

Due to this high sensibility the transducer is suitable for various applications:

— as dielectric shift detector when decomposing two or more immiscible liquids;

— as indicator when mixing liquids to indicate that the correct concentration of the mixture components is obtained;

— as quality meter for measuring possible fluctuations in the dielectric constant $\varepsilon_r$.

FIG.3

- 1 -

Titel: Through-flow transducer of the capacitor-type.

The invention relates to a through-flow transducer of the capacitor-type to be built-in into a tubing system for capacitive and/or conductivity measurements of a fluid flowing through the transducer, in which one electrode plate of the capacitor is formed by the housing of the transducer, said housing being tubular and earthed, whereas the other ("hot") electrode of the capacitor is insulated with respect to the housing.

A capacitive transducer for through-flowing fluids is known. In such a transducer a rod-shaped electrode is passed through the wall of the housing and extends into the fluid flowing through it, fluids like liquids, fluidized powder or granulated materials or the like. Such a rod-shaped electrode constitutes, however, an obstacle in the flow of fluid. Further the rod's area acting as said one electrode of the capacitor is small and the distance from the rod to the opposite (inner) surface of the housing cannot be made infinitely small, because otherwise all kinds of solid particles in the fluid-flow would stick in the narrow passage between the opposing electrode areas constituting this capacitor. Therefore herewith no great sensibility can be obtained, so that the known transducer can only be used for fluids having a clear and sharp shift in dielectric constants, such as for instance between oil and water.

Simultaneously with or after the transducer with the rod-shaped electrode, a transducer came into development in which the capacitor was formed by electrodes being located on either side of the coupling-flange in the tubular system. So the transducer consisted of a tubular housing that by means of connecting flanges was placed at the joint of two tube sections of the tubing system, through which was flowing the fluid, of which the dielectric constant should be measured. The transducer housing being connected to an oscillator, constituted the ("hot") electrode, the tube-sections on either side of the transducer constituted the "cold", earthed electrode. The field strength lines traversed axially the gap between the flanges, by means of which the transducer and the tube-sections were connected to each other. The gap width was therefore strongly dependent on the clamping force by which the flanges were clamped together. With that transducer no precise and reliable results could therefore be obtained. Besides it is a great disadvantage that the housing of the transducer could not be earthed.

An other disadvantage of the predecessor of the present transducer was that if incorporated in a plastics tubing system, the tube sections adjacent the transducer had to be coated at their ends with electrode material. Now it was again possible to earth the housing of the transducer, because now the tube sections were not automatically earthed. This construction has also the advantage that deposits on the electrodes will be formed much slower than in the transducer with rod-shaped electrode, so that the maintenance costs decrease.

The invention has for its object to provide a transducer whose sensibility is strongly enhanced and which therefore is able to detect the presence of traces of an other fluid, there being always a constant distance between the electrodes.

In accordance with the invention, the capacitive transducer is characterized in that said latter electrode is tubular like said former electrode, and cooperates wholly or partly with said former electrode, said two electrodes being separated from each other via a peripheral gap. Thus the transducer of the invention comprises the two electrode plates of a capacitor and is as such a complete unit so that the assembling and fabricating of this transducer can be done more simply. Moreover the housing can be earthed now. The gap or gaps formed are independent of the manner in which the transducer is mounted in a tubing system. So the electrode distance (gap width) is constant and can be made small to very small without enay risk of clogging.

In the continuous process controlling in the chemical and the petroleum industry, where frequently fluids have to be decomposed, for example between oil and water and the like, or processes where various fluids have to be mixed, such as in perfumery industries, paint industries etc., usually there is more than one shift or transition which have to be monitored, for example in the fractionated distillation of petroleum, in which petrol, kerosine, gas-oil and lubricating oil are won, there are three shift, jump or transient points or ranges involved. To monitor all three of them, in order to control them automatically, it imports to divide the latter electrode by means of axial and/or peripheral insulating gaps into sub-electrodes, which for the forming of sub-capacitors cooperate mutually and/or with the former electrode, and are connected to an individual processor.

With the aid of these embodiments it is possible to work solely with capacitors whose electrodes are axially in alignemnt, or solely with capacitors whose electrodes are circumferentially juxtaposed, whereas combinations of the two embodiments are possible.

In both embodiments the favourable circumstance occurs that on either side of a gap the electrodes constituting a capacitor, have a very small distance and that the capacitance value attains a maximum there, so that a high sensibility is obtained. Already the presence of slight traces of water in oil can influence the measured value of the dielectric constant, provided the traces do occur in the electrical field. Since these watertraces can be the precursor of the transient from oil to water, it is possible already in an early stage to cease the further pumping-up of oil from the well. The measuring cell, after its incorporation into the tubing system, is connected to an alternating current bridge being driven by an oscillator.

Though the "hot" electrode may be provided in insulating position against the inner wall of the housing, "incorporation within the housing" is to be preferred, so that but little or nothing at all of the "hot" ring electrode protrudes. Therefore in accordance with the invention said latter electrode is received in an insulating manner within a recess in the former electrode, facing the interior of the transducer. This measure can also be taken, when the "hot" electrode is an integral member, provided the recess be located near one of the end faces of the housing. If the "hot" electrode is constituted of two or more parts, the recess can also be provided symmetrically in the housing. Since the fluids of which a parameter is to be measured have sometimes a great specific conductivity, so that short circuit between the various electrode plates could occur, or for other reasons, such as aggressive behaviour, corrosion etc., are unsuitable for direct contact with the electrode-surface, the planes of the former and latter electrodes both facing the transducer's interior, are coated with plastics or similar electrically insulating material.

With a transducer according to the invention, where the "hot" electrode is divided into sub-electrodes according to axial and/or peripheral gaps, and is fabricated in this embodiment as a standard article, it can sometimes be desirable that this divided electrode be acting as one electrode. Accordingly means are provided to connect the various sub-electrodes in which said latter electrode is divided, wholly or partly, to reduce the number of sub-electrodes.

Not withstanding it is a great advantage of the sub-dividing of the "hot" electrode into sub-electrodes, that to each sub-capacitor an individual oscillator with amplifier can be connected. When in this way two circuits are connected mutually, the amplification or gain is double.

Still an other advantage is that to each of the oscillators connected to these sub-electrodes a different frequency can be imparted. In this way it is possible for example to separate or decompose liquids, such as alcohol and similar volatile substances into their boiling range by means of the small differences in the dielectric constant, existing between the various distillate fractions.

Yet an other application thereof is to mix alcohol with water in any ratio desired.

An other practical application is as follows: oil from a well is not only in interfacial contact with "sea"water, but also with air. The dielectric constant of these three substances are: $\xi_r$ (water)=80, $E_r$(oil)= 2 and $E_r$ (air)= 1. In a tank, in which these three mediums occur, there are two boundary layers, where a transient from one medium to the other medium can take place. In order to control said process, one cylinder half is connected to an oscillator with frequency $F_1$ and the other cylinder half to an oscillator with frequency $F_2$. It is possible to adjust the two circuits, of which these oscillators are a part, such that if the dielectric constant undergoes a predetermined modification, the position of certain valves is automatically changed, so that neither air nor water will enter in the definitive oil reservoir. It will be clear that in view of the small differences between the dielectric constant of oil and air, the difference signal generated in this circuit must be amplified more than in the other circuit, in order to effect switching activities.

That is the reason why the diametrical separation between the two cylinder halves of the horizontally arranged measuring tube is provided according to a a vertical plane running through the center line of the tube. So there where the greatest concentration of electrical lines of force from said one electrode to the other occurs, the effect of a change in the dielectric constant will be relatively greatest.

Entirely in this manner the invention is reversely applicable to indicate the precence of traces of oil in water. Resuming the principal applications of the through-flow transducer according to the invention are the following:

a) as transient detector for fluids with a great $\xi_r$ difference.

b) as transient detector for fluids with a small $\xi_r$ difference.

c) as quality meter for measuring possible fluctuations in $\xi_r$.

d) as transient detector to detect the transient between a large number of substance or fractions to be separated.

In general the advantages of the transducer according to the invention can be indicated as follows:

1. Slurry-like substances can be measured well;

2. There are no obstacles in the tubing system (if compared with a transducer with   rod-electrodes);

3. Small chance of pollution;

4. The transducer is applicable from vacuum up to about 500 bar;

5. The transducer itself is a complete capacitor;

6. The transducer can be mounted simply for example by dismounting a shutter in the tubing system and to replace same by the present measuring cell;

7. The cell is built such that it functions independently as capacitor, so that the cell can also be placed in ducts without earthing facilities, for example plastics conducts, plastics ropes, glass-lined ducts.

The invention will be explained in further detail below with reference to the embodiments shown in the figures of the enclosed drawings, in which

Figures 1 and 2 represent apparatus known in the prior art;

Figure 3 and following represent the measuring system according to the invention;

Figure 4 shows only part of the transducer according to the invention being an alternative embodiment of that according to fig. 3;

Figure 5 is a cross-section in which the "hot" electrode is divided by means of axial gaps into four cylinder segments acting as sub-electrodes;

Figures 6 - 9 show various applications of the invention;

Figures 10 - 14 show a practical realisation of the transducer according to the invention, in which

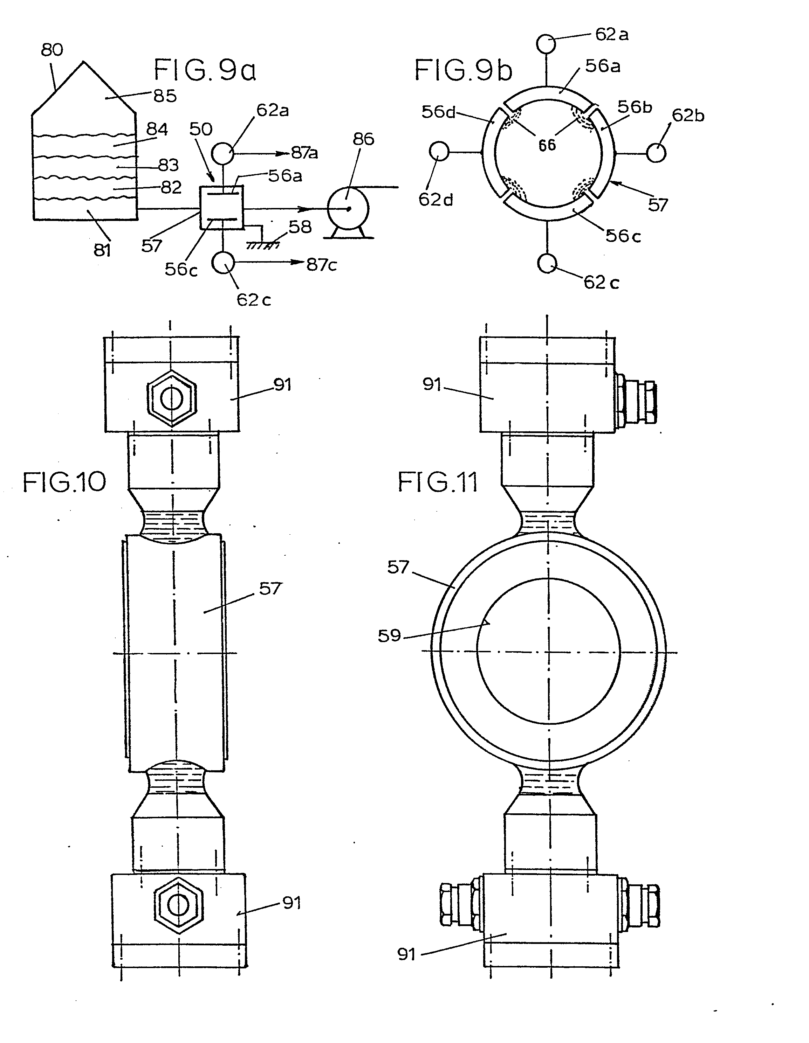

Figures 10 and 11 represent the transducer in an elevational and in a side view; and

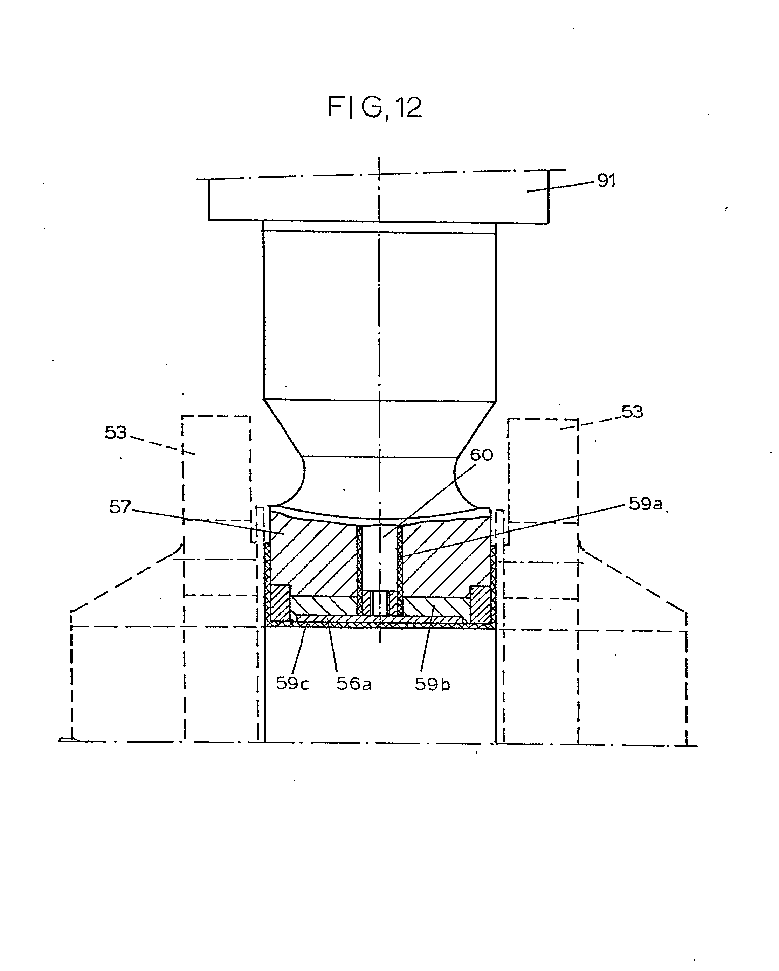

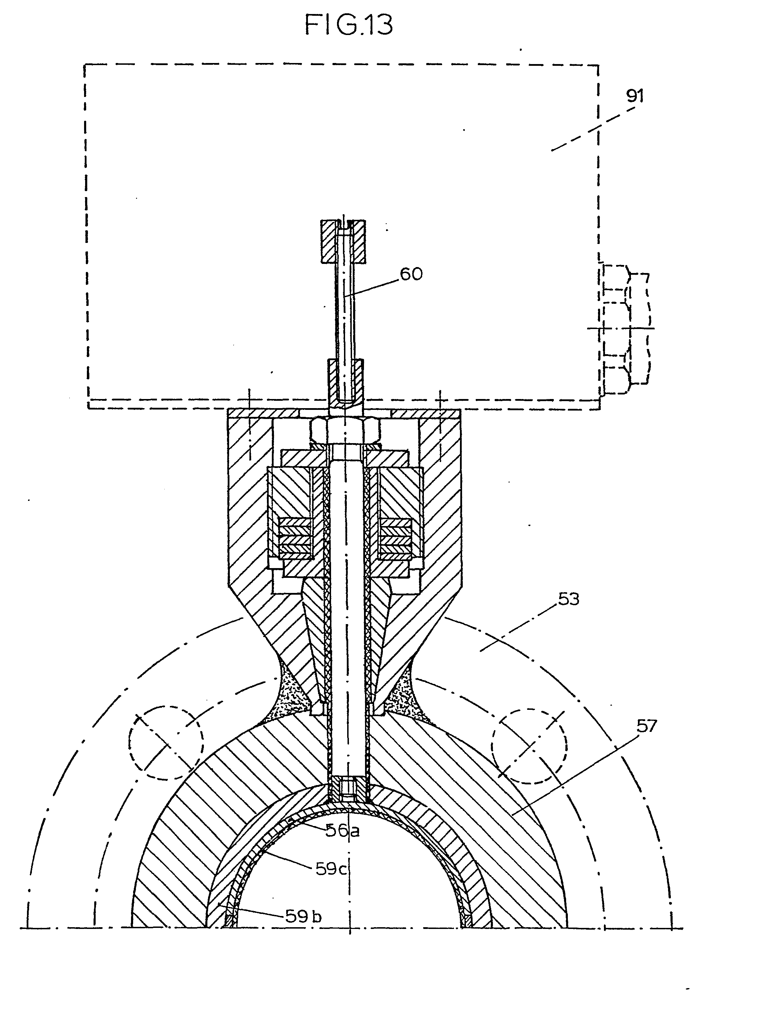

Figures 12 and 13 represent the same, but in cross-section and at an enlarged scale.

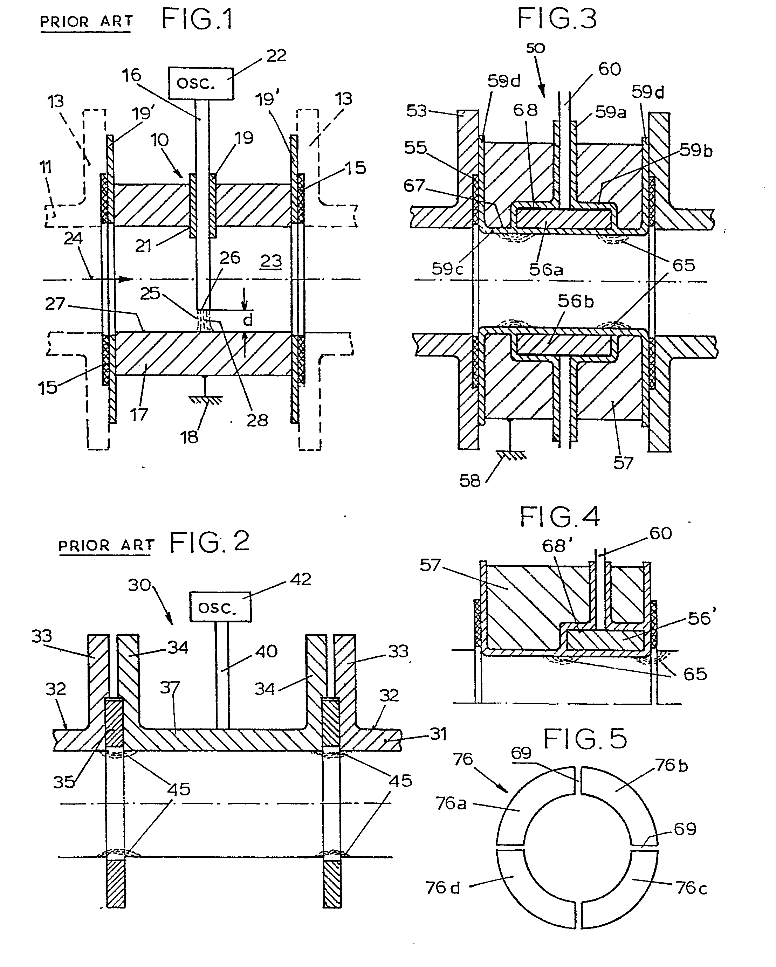

In figures 1 and 2 is shown the prior art in the domain of through-flow transducers of the capacitor type. In figure 1 is shown a transducer 10 which can be placed in a tubular system 11 between coupling flanges 13, drawn in dotted lines, and after the provision of a stuffing ring 15. The capacitor here is formed by a rod-electrode 16 and a cylindrical electrode 17, being earthed at 18. The rod-electrode 16 is passed via an insulating through-pass 19 through a bore 21 into the cylindrical electrode 17 and is connected to an oscillator 22. The rod-electrode 16 protrudes into the interior 23 of the cylindrical electrode 17, through which is flowing (vide arrow 24) the liquid or an other fluid, of which the dielectric constant is to be measured. The electric field 25 is formed between the end face 26 of the rod 16 and the opposite surface 27 of the cylindrical electrode 17.

The cylindrical electrode 17 is considered here, as in the tubing system 11, to be metallic and therefore, during the assembling, an insulating ring 19' is provided between the cylindrical electrode 17, acting at the same time as an earthed housing, and the flange 13 of the tubing system 11. The distance D of the gap 28 between the end face 26 of the rod electrode 16 and the opposite surface 27 of the cylindrical electrode 17 cannot be given any small dimension in connection with possible cloggings in the narrow passage of the gap 28. The instrument is therefore insensible.

In the through-flow transducer 30 of figure 2 the capacitor is formed between the cylindrical electrode 37, acting as transducer housing and the adjacent tubing sections 32 of the tubing system 31, which, if made of steel, provide automatically for earthing, so that the housing 37 of the transducer 30, to which the oscillator 42 is connected via a pin 40, cannot be earthed.

In contrast with the transducer 10 with rod electrode 16, the transducer 30 here does not comprise a complete capacitor, since the earthed plate must be provided externally by the tubing system 31, to which the transducer 30 is mounted. The electrical field 45 is not radial here, but axial, due to the fact that the "plates 37, 31" of the capacitor are not opposite each other, but are juxtaposed. The plate distance is defined by the thickness of the insulating ring (for example a stuffing ring 35) between the flanges 33, 34 and is highly dependent on the force with which the flanges are compressed. When a transducer 30' is built-in into a tubing system 31 of plastics, the automatical external earthing is lacking, and special measures should be taken therefore.

The disadvantages mentioned before, which adhere to the known through-flow meters 10, 30, are avoided in the transducer 50 according to the invention, as shown in figure 3. In the first place the capacitor is now again complete within the transducer. It acts as earthed cylindrical electrode 57. Against part of its inner surface 67 is resting, separated by an insulating layer 59, the so-called "hot" electrode 56, being connected to the oscillator 62 via an insulated pin or cable 60. The traversing of the field lines 65 between the juxtaposed electrodes 56, 57 occurs entirely within the transducer 50. The distance between these electrodes is constant.

If it is desired to provide the "hot" electrode symmetrically into a recess 68 of the earthed electrode, then the "hot" electrode 56 is made into two parts, which parts 56a, 56b, after assembling, can be again connected mutually. If the recess 68' is not provided symmetrically, but is shifted towards one of the end faces of the electrode 57, earthed at 58, then the "hot" electrode 56' need not be divided. This possibility is shown in figure 4, in which, however, only part of the transducer of figure 3 is represented, because the other components of the transducer have remained unchanged.

Reverting to fig. 3, it is also possible in a symmetrical embodiment, that means an embodiment in two parts, to keep the sub-electrode 56a, b separated, and to connect them each to an own oscillator and amplifier. In this way, two sub-capacitors are obtained, each connected to an own processor circuit. In this situation two transient points can be watched when three various fluids are involved in the through-flow measurement, for example the separation level between oil and water in a storage tank, and between oil and air. Or it is possible to watch the limits of a transient range between two components of a mixture (for instance water and alcohol). One circuit responds to the upper limit and the other circuit responds to the under limit.

When the outputs of the amplifiers are connected, doubling of the gain can be obtained, which is advantageous if the difference in the electric constant of both components of the fluid to be measured is not very great.

To prevent a conductive through-flowing liquid from making contact with the capacitor plates, the plates are coated with a layer of polytetrafluorethylene (teflon) 59. In this way the transducer can be used to monitor a certain adjusting range of an acid ( HCL, $H_2SO_4$, $H_3PO_4$, etc), which is thinned with water. When more transient or range limits are to be watched, it is to be preferred to divide the "hot" electrode 76 by axially directed gaps 69 into four sub-electrodes 76a-d, which cover each a circle-arc of $90^{\circ}$; vide figure 5. If necessary, further sub-divisions can still be made.

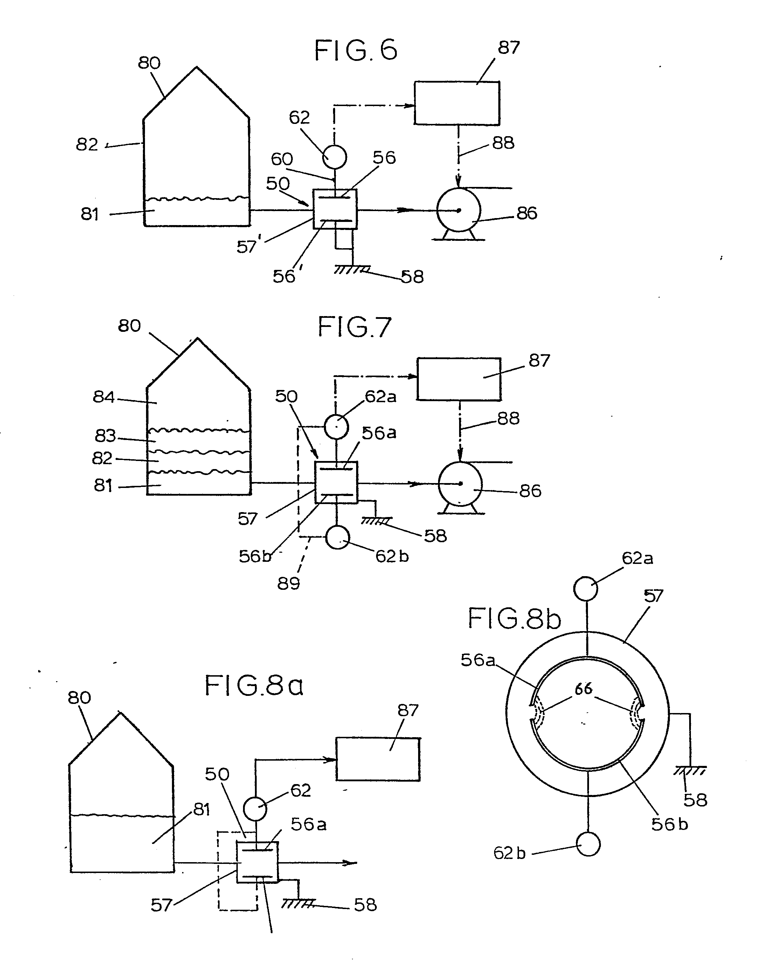

The various above mentioned applications can be represented schematically in figures 6-9. In figure 6 the through-flow transducer 50 is shown while used as transient detector, when two liquid components, having one transient point, occur in the through-flowing fluid, being stored in a storage tank 80. For example a tank in which water 81 is at the bottom and oil 82 is resting on top of it. First water is flowing out of the tank in order to be guided via a suitable position of a valve 86, into the sewer or an other drain, This is continued until the moment is reached that the first oil droplets flow along with the water. Due to the great difference in dielectric constant, there is a sharp transient, which creates a strong controlling signal 88 in the processor 87 to modify the position of the valve 86, so that the valve let pass the oil to a supply reservoir or the like, where the oil is rather completely stripped off water (seawater). The electrode 56' and the housing 57' are both earthed at 58.

In figure 7 there is illustrated a settling tank 80', which shows three transitions between components 81-84 of the flowing fluid. As the figure clearly shows, the "hot" electrode consists of two sub-electrodes 56a,b separated by axial gaps, said sub-electrodes being connected to an own oscillator and amplifier 62a, b. If with these boundary layers there are transitions which are not sharp, because the $\varepsilon_r$ difference is small , the signals of the two amplifiers can be added by means of a summing line 89, so that yet a relatively strong signal 88 is sent from the processor 87 to the valve 86 to put this in an other position when the supply of one component stops and the supply of an other component starts. In the present case one may think of the following components: Seawater 81, fresh water 82, oil 83 and air 84. The figure represents the situation in which at first the rather unsharp transition between sea water and fresh water is to be detected. Here the housing 57 is earthed at 58.

In figure 8 is shown an arrangement with through-flow transducer 50 according to the invention, in which the transducer is exeexuted as quality meter, viz. to detect variations in $\varepsilon_r$ of one component-fluid. This determination can be done such that a recorder or similar writing instrument placed behind the processor 87 registrates the fluctuations in $\varepsilon_r$ only in a graph or in any other manner, so that conclusions can be drawn therefrom about the homogeneity of the fluid. This may be called a passive determination. In figure 8b a cross-section of the housing 57 is drawn with field lines 66 between the sub-electrodes 56a and b, if a voltage difference consists there between. Apart therefrom there exists an axial field range 60 (not-represented) between electrode 57 and electrode 56, as appears from figures 3 and 4.

In figure 9 an application is represented, in which the transducer 50 is being used as transient detector between five components 81-85 in which in the case here represented four transients are monitored by four individual circuits, for which purpose, by means of a division in sub-electrodesfour sub-capacitors 56a-d have been formed, having each its own oscillator 62a-d, amplifier and processing circuit; vide also figure 9b.

Figures 10-13 show a practical embodiment of the through-flow transducer according to the invention. This embodiment comprises two connecting boxes 91, each for an individual processing circuit.
It is to be noted in figures 10, 11 that a rather compact apparatus have been provided and for this reason can be arranged at the place of a shutter, provided somewhere in the tubing system. Figures 12, 13 show some details of the mechanical construction of the transducer according to the invention. The reference numbers used therein correspond to similar components in figures 3-9.

1. Through-flow transducer of the capacitor-type to be built-in into a tubing system for capacitive and/or conductivity measurements of a fluid flowing through the transducer, in which one electrode plate of the capacitor is formed by the housing of the transducer, said housing being tubular and earthed, whereas the other("hot") electrode of the capacitor is insulated with respect to the housing, characterized in that said latter electrode (56) is tubular like said former electrode (57), and cooperates wholly or partly with said former electrode, said two electrodes being separated from each other via a peripheral gap (67).

2. Through-flow transducer according to claim 1, characterized in that said latter electrode is divided into sub-electrodes by axial and/or peripheral, insulating gaps, said sub-electrodes cooperating mutually and/or with the former electrode in order to form sub-capacitors, and being connected to a separate processor.

3. Through-flow transducer according to claim or 2, characterized in that said latter electrode is received in an insulating manner within a recess in the former electrode, facing the interior of the transducer.

4. Through-flow transducer according to any of claims 1-3, characterized in that the planes of the former and latter electrodes both facing the transducers' interior, are coated with plastics or similar electrically insulating material.

5. Through-flow transducer according to any of claims 2 - 4, characterized in that means are provided to connect the various sub-electrodes in which said latter electrode is divided, wholly or partly, to reduce the number of sub-electrodes.

PRIOR ART FIG.1

osc. 22

FIG.3

50

FIG.2 PRIOR ART

osc. 42

FIG.4

FIG.5

FIG.6

FIG.7

FIG.8a

FIG.8b

FIG.9a

80
85
84
83
82
81

50
62a
87a
56a
57
56c
62c
87c
58
86

FIG.9b

62a
56a
56d
56b
62b
66
57
62d
62c
56c

FIG.10

91
57
91

FIG.11

91
57
59
91
91

FIG.12

FIG.13

## EUROPEAN SEARCH REPORT

**European Patent Office**

**0077595**
Application number

EP 82 20 1304

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A- 894 264 (WAYNE KERR LAB) *Page 2, line 30 to line 70; figures* | 1,3 | G 01 N 27/22 |
| Y | GB-A- 717 127 (UNILEVER) *Page 1, line 80 to page 2, line 24; fiure 1* | 1 | |
| Y | US-A-4 074 184 (R.L.DECHENE) *Column 2, line 33 to line 68; figures 2,5* | 1,2 | |
| A | US-A-3 639 835 (A.K.DAMMIG) *Page 1* | 1,2,5 | |
| A | FR-A-2 288 981 (E.AHLBORN) *Page 2, claims 1,2* | 1,4 | TECHNICAL FIELDS SEARCHED (Int. Cl. 3) |
| A | DE-A-2 462 039 (VDO A.SCHINDLING) *Page 6; claims 1,2* | 1,4 | G 01 N 27/22 G 01 N 27/07 |
| A | CH-A- 574 105 (R.BLOCK) *Column 4, claim 4* | 1,2 | |

The present search report has been drawn up for all claims

| Place of search | Date of completion of the search | Examiner |
|---|---|---|
| THE HAGUE | 27-01-1983 | DUCHATELLIER M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82